# EUROPEAN PATENT APPLICATION

(11) **EP 3 103 998 A1**
(43) Date of publication of application: **14.12.2016**
(21) Application number: 15171499.5
(22) Date of filing: 10.06.2015
(51) Int. Cl.: F02M 37/00, B60K 15/03

(54) **CONFIGURABLE FUEL TANK SENSOR ASSEMBLY**

(71) Applicant: WEMA System AS, 1201 Bergen (NO); WEMA System AG, 6343 Rotkreuz (CH)
(72) Inventor: Eliassen, Bengt, 5236 Raadal (NO); Ionita, Razvan Iulian, 5227 Nesttun (NO); Grozea, Ion, 5254 Sandsli (NO); Stan, Daniel George, 5258 Blomsterdalen (NO); Teixeira, Andreas Batista, 6006 Luzern (CH)
(74) Representative: Grünecker Patent- und Rechtsanwälte PartG mbB

(57) **Abstract**

The invention relates to a fuel-tank sensor assembly (1) which may, in particular, be used with an internal-combustion engine especially in the automotive sector. The fuel-tank sensor assembly (1) comprises a flange-section (2) for attaching it to a fuel-tank (3). An outward side (4) of the fuel-tank sensor assembly (1) extends outside of the fuel tank if the fuel-tank sensor assembly (1) is mounted to the fuel-tank. An inward part (9) of the fuel-tank sensor assembly (1) rests within the fuel-tank if the fuel-tank sensor assembly (1) is mounted to the fuel-tank. To accommodate various fluid tanks, the flange-section (2) may be provided on the inward side (6) with two annular sealing regions (39). A second sealing region (43) may be located within the first sealing region (42). The second sealing region (43) may be at or at the base of a socket (52) by which the fuel-tank sensor assembly (1) may be attached to a fuel-tank. The first sealing region (42) may be provided with openings (46) through which fixation elements such as screws may be inserted, to mount the fuel-tank sensor assembly (1). To further increase versatility of the fuel-tank sensor assembly (1), a rotatable air-ventilation connector (18) and a housing (12) which allows the electric connection section (10) to be arranged on at least two different sides may be provided.

## Description

The invention relates to a fuel-tank sensor assembly adapted to be installed in the fuel tank of an internal combustion engine driven by liquid fuel.

Fuel-tank sensor assemblies are used in connection with internal-combustion engines to measure the amount of fuel left in the fuel tank and at the same time provide a fuel line for conducting the fuel from the tank to the engine. A return fuel line may also be comprised by the fuel-tank sensor assembly to allow for a permanent circulation of the fuel. From the continuous stream of fuel, the fuel needed for the combustion is branched off.

Fuel-tank sensor assemblies are manufactured to accommodate a certain type of vehicle. This results in high manufacturing costs and lengthy development times as each type of vehicle needs a particular fuel-tank sensor assembly. Thus, to decrease costs, it is desirable that the fuel-tank sensor assemblies are made more versatile and can be used across a wider variety of vehicle models.

According to the invention, this problem is solved by a fuel-tank sensor assembly, in particular for vehicles with internal-combustion engines, comprising a flange member which is adapted to be mounted to a fuel-tank, the flange member having an outward side, on which fluid connectors are arranged, and an opposite inward side, the flange member further comprising, at the inward side, at least two annular sealing regions each having a ring-shaped recess that is adapted to receive a sealing element.

By providing two distinct sealing regions, the fuel-tank sensor assembly is more versatile as it can be used in two different configurations which each makes use of one of the sealing regions. For example, the fuel-tank sensor assembly can be mounted without any modification to two types of tanks which have two different sizes of openings, in which the fuel-tank sensor assembly may be received.

The solution according to the invention can be further improved by independently adding further features as explained below.

For example, the recesses may in one embodiment be adjacent to each other. Each recess may be formed by an annular groove. The recesses or grooves may be coaxial to each other. A ground of the grooves may be parallel to the flange member.

The flange section may be provided with openings through which fixation elements such as screws, bolts or rivets may be inserted to attach the fuel-tank sensor arrangement to the fuel tank. The openings may be distributed equigonally about a perimeter, in particular about a substantially planar, disk-like section of the flange member.

These openings may be located within the first sealing region of the at least two sealing regions, in particular within the recess of the first sealing region. The openings allow to direct the clamping force which attaches the fuel-tank sensor arrangement to the fuel tank directly to the second sealing region. In such an embodiment, a sealing element may be received in the recess, the sealing element having holes that are aligned with the openings of the flange member. The sealing element may be a sealing gasket having a rectangular cross-section and may provide a planar sealing surface.

The openings in the flange section may be provided with metal enforcement members so that large clamping forces are tolerated by the flange member without damage. The enforcement members may be sleeves that clad the inner perimeter of the openings. The enforcement members may be inserted into the body of the flange member by molding the material of the flange member around them.

A first of the at least two sealing regions may provide an annular and planar sealing surface extending parallel to the flange member. Such an arrangement may be used to simply press a rim of the opening or a rib extending around the opening into the sealing region and thus sealing any gap between the fuel-tank sensor assembly and the tank. Openings that are adapted to receive fixation elements, such as screws, bolts or rivets, and which may extend through the flange member, are located preferably completely within the first of the at least two sealing regions. Such a location of the openings for the fixation elements ensures that the force generated by the fixation elements is acting directly on the sealing region.

A second of the at least two sealing regions may provide an annular sealing surface, which faces radially outwards. For example, such a sealing region may be provided by an O-ring, which is held by the fuel-tank sensor assembly. Such a configuration may be used to effect a sealing by inserting the sealing region into a tube-like section of the tank. The sealing then takes place by the sealing region resting on an inner parameter of this tube section.

The second of the at least two sealing regions may, according to one embodiment, extend around a particularly cylindrical socket extending away from the flange member. The socket may provide guidance and lateral support for fixing the fuel-tank sensor assembly to the tank. The second of the at least two sealing regions may particularly be located at a base of the cylindrical socket, in particular at a section, in which the cylindrical socket is connected to the flange member.

According to a further advantageous embodiment, the socket may provide a coupling element that is adapted to fix the fuel sensor assembly to a fuel tank. Such a coupling element may for example, be a thread or a bayonet coupling. The socket may further provide a support for any fuel duct and/or sensor arrangement which protrudes from the flange member to the inwards direction.

The second sealing region may be located within the first sealing region.

The fuel-tank sensor assembly may comprise at least one, preferably both of a fuel duct, in the form of a tube arrangement, and a fuel level sensor that extends from the inward side of the flange member. The length of the fuel duct or, if more than one fuel duct is present, the fuel ducts and/or or the fuel level sensors may be longer than at least two diameters of the flange member.

The fuel ducts may extend away from the flange member to a filter member, in which they may terminate.

According to another advantageous configuration, the fuel-tank sensor assembly may comprise an air-ventilation connector including on the outward side of the flange member, in particular on the duct housing. The air-ventilation connector may provide a preferable tube-like connection section being configured to be connected to an air ventilation line. The air-ventilation connector is configured to be positioned in at least two different orientations with respect to the flange member thus allowing the direction from which the air-ventilation line is attached to the air-ventilation connector.

In particular, the air-ventilation connector may be attached rotatably with respect to the flange member. The axis of rotation may be parallel to the inward-outward direction. By being rotatable, the orientation of the air-ventilation connector may be adapted to the needs at the location where the fuel-tank sensor assembly is installed. Thus, versatility of the fuel-tank sensor assembly is further improved. Of course, the air ventilation connector may be connected to an opening on the inward side of the fuel-tank sensor assembly.

In particular, the air-ventilation connector may assume different position rotated relative to the flange member in a plane parallel to the flange member. For some applications, it may be sufficient if the rotation is confined to this plane, so that a simple design for the rotatable support and its sealing is possible. It is preferred that the fitting element, or at least the connection section, is rotatable across an arch of at least 90°, more preferably at least 180°.

The rotatability of the air ventilation duct not only increases the adaptability of the fuel-sensor assembly to various mounting situations. The rotatability further decreases the forces which act on the fitting element, so that it cannot break off easily but may evade such forces by being rotated.

In some circumstances, it may be advantageous to have an indexing or fixation assembly, which is configured to fix the fitting element at a particular rotation position relative to the flange member. This fixation may be accomplished by friction, a grating or with types of a positively locking structure.

The fuel-tank sensor assembly may further comprise an electrical assembly that is arranged at least partly within a housing and which may include an electrical connection section which is accessible from the outward side of the flange member. The electrical connection section may further comprise a connector. According to one embodiment, the fuel-tank sensor assembly is configured to accommodate the electrical connection section either facing in one direction or facing in another direction, which may deviate from the one direction by 90° or 180°. This further improves the versatility of the fuel-tank sensor assembly by allowing for different installation environments.

To achieve alternative orientations of the electric connection section, the housing for the electric assembly may be configured to be arranged in a first state, in which the electrical connection section is facing towards a first direction, or in a second state in which the electrical connection section is facing towards a second direction. The housing components preferably remain the same in the two states so that the same parts of the fuel-tank sensor assembly may be used in the two states of the housing.

Changing the direction in which the electrical connection section is facing may simply be accomplished by allowing the housing of the electric assembly as a whole to be mounted in at least two different orientations with respect to the flange member. This, however, requires that also the electric assembly within the housing can be mounted in at least two different orientations with respect to the flange section.

Alternatively, it may be advantageous if the different orientations of the electric connection section are accomplished by dividing the housing into several parts and having those parts which house the electric assembly stationary and parts that only cover the stationary parts being configured to be installed in various positions relative to the stationary parts.

For example, the housing may comprise a first housing part, which preferably houses the electrical assembly. The first housing part may include a first opening facing in the first direction and a second opening facing in the second direction. The first and second opening may be configured to have an electrical connection assembly, which may be a connector and/or a line extending there-through. The electrical connection assembly may be held movable, so that it is free to extend either through the first or the second opening. This can be done, if for example, a connector on a line is provided, which line may be fed through either the first or the second opening.

In such a configuration, a second housing part may be provided, which is adapted to be mounted to the first housing part in at least two different positions. In the first of the at least two different positions, the first opening may be closed by the second housing part and the second opening may be open. In the second of the at least two positions, the second opening may be closed by the second housing part and the first opening may be open. Thus, in the first position, the electrical connection section is located in the second opening or extending there-through, in the second position, in the first opening.

The second housing may, for example, comprise a closing flap which overlaps, depending on the position in which the second housing is mounted to the first housing, with either the first or the second opening.

In the following, the invention is exemplarily described with reference to the figures. In the figures, the same reference numerals are used for elements which are identical or similar in design and/or function.

In the figures:
- Fig. 1: shows a schematic perspective view of a fuel-tank sensor assembly according to the invention;
- Fig. 2: shows a schematic perspective view of the fuel-tank sensor assembly of Fig. 1 from another angle;
- Fig. 3: shows a schematic cut view through a part of the fuel-tank sensor assembly of Fig. 1;
- Fig. 4: shows a schematic cut view of a part of the fuel-tank sensor assembly of Fig. 1 in a configuration different from Fig. 3;
- Fig. 5: shows a schematic perspective view of a part of the fuel-tank sensor assembly of Fig. 1 in one configuration;
- Fig. 6: shows a schematic perspective view of the fuel-tank sensor assembly of Fig. 1 in another configuration;
- Fig. 7: shows a schematic top view onto the fuel-tank sensor assembly of Fig. 1.

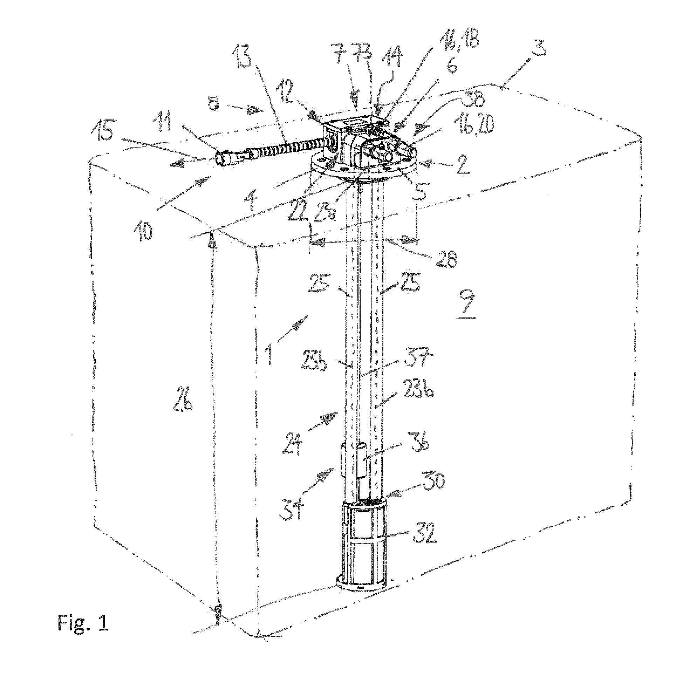

First, the design of an exemplary fuel-tank sensor assembly 1 is described with reference to Figure 1. The fuel-tank sensor assembly 1 of Figure 1 is primarily suited for tanks used for liquid fuel of internal combustion engines used for example in vehicles, boats and stationary machines such as generators.

The fuel-tank sensor assembly 1 comprises a flange member 2 which is adapted to be fixed to the wall of the fuel tank 3. The fuel tank 3 is indicated by phantom lines. The flange member 2 as shown comprises a substantially disk-like body 4 with an annular, substantially planar section 5 surrounding a central part 6 , where further installations 7 may be located.

The fuel-tank sensor assembly 1 has an outward side 8 which is located outside of the fuel-tank 3 if the fuel-tank sensor assembly 1 is mounted to the fuel-tank 3. An inward side 9 of the fuel-tank sensor assembly 1 is located inside the fuel-tank 3 when the fuel-tank sensor assembly 1 is mounted to the fuel-tank 3.

On the outward side 8 of the fuel-tank sensor assembly 1, an electric connection section 10 may be provided, which preferably comprises an electric connector 11. The electric connector 11 may be fixed to a housing 12 either directly or indirectly by a line or cable 13. In the housing 12, an electric assembly 14 is at least partly received. The electric assembly 14 outputs, via the connector 11, electric signals 15 which are representative for the amount of fuel in the fuel-tank.

The installations 7 on the outward side 4 of the fuel-tank sensor assembly 1 may comprise at least one, preferably a plurality of fluid connectors 16, such as an air ventilation connector 18, and/or at least one, preferably a pair of fuel line connectors 20. The fluid connectors 16 may all be arranged on a duct housing 22, which houses the various ducts, e.g. an air ventilation duct 23a and/or at least one fuel duct 23b. The duct housing 22 may be monolithically combined with the housing 12 and/or the flange member 2 e.g. by being an injection-molded integral part preferably made from a resin or plastic material which may be fiber-enforced.

On the inward side 9 of the fuel-tank assembly 1, a tubing arrangement 24 including one, two or more tubes 25 may be provided. The tubing arrangement 24 extends away from the flange member 4, in particular its central part 6, by a length 26, which is preferably larger than a plurality of, such as two or more, diameters of the flange member 2. The tubing arrangement 24 may terminate at an inward end 30 in a filter element 32.

A fluid-level measuring arrangement 34 may be provided and may extend from the central part 6 away from the flange member to the inward side 9. The fluid-level measuring arrangement 34 preferably comprises a floating gauge 36 which is guided in a direction towards the floating section 4 and away from it by a rod-like guiding member 37. The rod-like guiding member 37 may extend in parallel to at least one of the tubes 25, or the tubing arrangement 24. The floating gauge 36 changes its position along the guiding member 37 depending on the fluid level in the fuel tank 3. By picking up and processing this position in the electric assembly 14, the fluid-tank sensor assembly 1 may output the electric signals 15 via the connector 11.

The flange member 2 is only by way of example shown as having a circular base area. Of course, the flange member may have any other form of base area such as polygonal. The advantage of having a circular cross section is, however, that the flange member 2 cannot be inserted into an opening 38 of the fuel tank 3 which has a smaller diameter than the diameter 28 of the flange member 4.

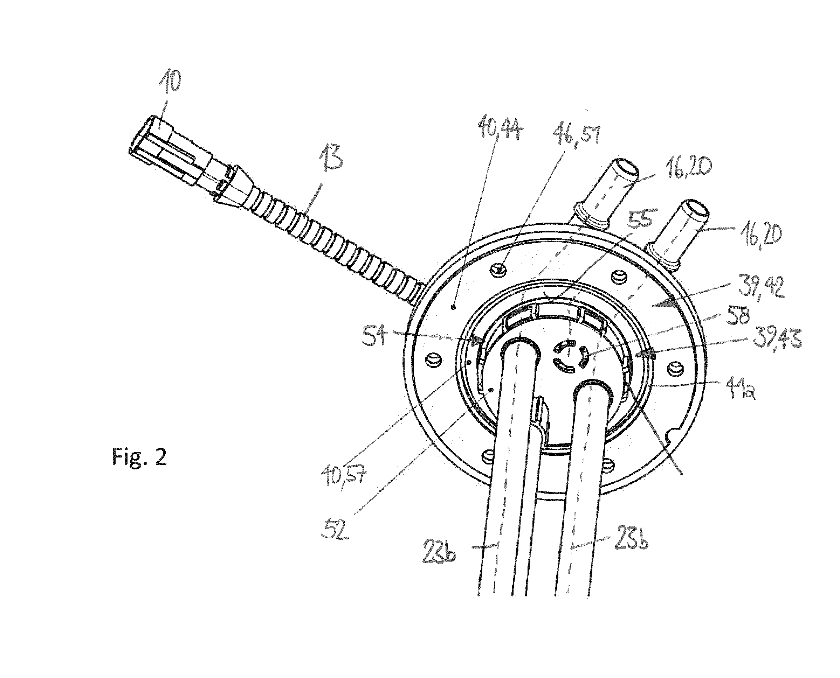

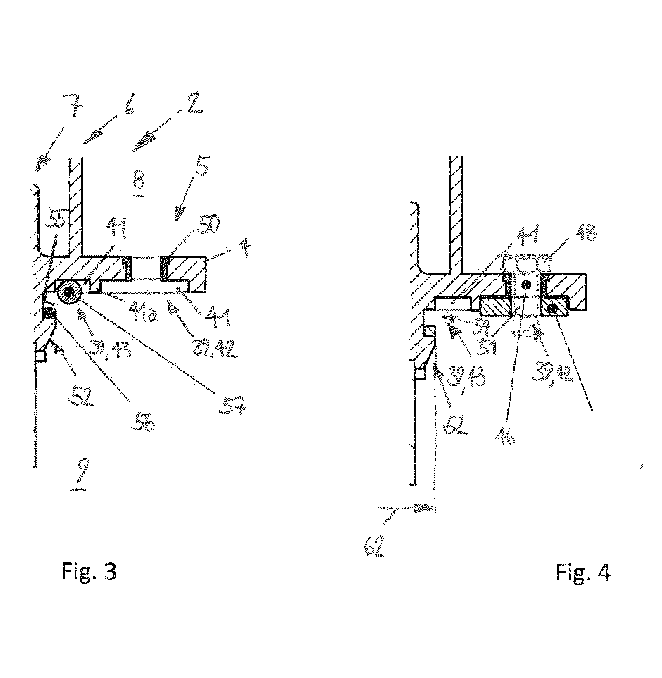

On the inward side 9, at least two annular sealing regions 39 are provided, which, in particular may be arranged coaxially to each other, as can be seen from Figures 2, 3 and 4. The sealing regions 39 may surround any installations 7, such as the tubing arrangement 24 or the fluid-level measuring arrangement 34 that protrude from the inward side 9 of the flange member 2.

Each sealing region 39 comprises an annular recess 41 in the form of a ring groove. In these recesses, sealing elements 40 may be received. The two recesses 41 may be adjacent to each other and separated e.g. by a ring-wall 41 a.

The two sealing regions 39 allow mounting the fuel-tank sensor assembly 1 to two different types of fuel tanks 3, which two types differ from each other in the size and/or configuration of their respective openings 38, without any modification to the fuel-tank sensor assembly 1.

A first sealing region 42 of the at least two sealing regions 39 may be situated at the substantially disc-like section 5 of the flange member 2. A second sealing region 43 may be located inside the first sealing region 42 so that the second sealing region 43 is located in an area which is encircled by the first sealing region 42. The first sealing region 42 thus may constitute an outer sealing region for larger openings 38 and the second sealing region 43 may constitute an inner sealing region for smaller openings 38. The first sealing region 43 may be located in the planar section 5 of the flange member 2 and may in particular enclose the central part 6 completely.

In the recess 41 of the first sealing region 42, a sealing element 41 in the form of a sealing gasket 44 having e.g. a rectangular cross-section may be received.

The first sealing region 42 may provide a substantially planar sealing surface 44. The sealing surface 44 may in particular extend parallel to the flange member 2 or its planar section 5. Within the first sealing region 42, openings 46 may be located that are configured to receive fixation elements 48 such as screws or bolts. The fixation elements 48 may be used to sealingly attach the fuel-tank sensor assembly 1 to the fuel tank 3. To allow to tighten the fixation elements 48 and to achieve high clamping forces for pressing the first sealing region 42 against the fuel tank 3, the openings 46 may be provided each with a reinforcement member 50. The reinforcement member 50 may be sleeve-like and may constitute at least partly the inner wall of the openings 46. The reinforcement members 50 may be made from metal and integrated into the flange member 2 during the molding process by molding the material of the flange member 2 around them. The openings 46 are also provided in the sealing gasket 44.

The sealing element 40 of the first sealing region 42 may be provided with holes 51 that are aligned with the openings 46.

The second sealing region 43 is located closer to the central part 6 of the flange member 2 than the first sealing region 42. As can be seen in Fig. 2, the central part 6 of the flange member 2 may have on the inward side 9 a socket 52. The socket 52 may be cylindrical and in particular be co-axial to the annular sealing regions 39.

The socket 52 may provide a fixation for the tubing arrangement 24 and/or the fluid level measuring arrangement 34, which may extend from the socket 52 into the fuel tank 3. Further, an air ventilation opening 54 which is connected to the air ventilation connector 18 (Figure 1) may be provided. Moreover, the socket 52 may comprise one or more fixation elements 56, such as a thread or elements or a bayonet coupling, for directly fixing the fuel-tank sensor assembly directly onto the fuel tank 3.

The second sealing region 43 and its recess 41 are preferably located at the base 54 of the socket 52 where it connects to the planar section 5 of the flange member 2. The recess 41 may be situated between the ring-wall 41 a and an outer circumferential wall 55 of the socket 52, so that a sealing element 40, such as an O-ring or a sealing ring having another cross-section and/or consistency, is located in the corner of the base 54.

The recess 41 of the second sealing region 43 may face axially, i.e. in the inward direction, so that the O-ring 57 is installed in the recess 41 from this direction. The recess 41 of the second sealing region 43 may be arranged to overlap at least partly in the axial direction with an outer diameter 62 of the socket 52. An outward-facing rim of the opening 38 of the fuel tank 3 may thus be pressed axially into the second sealing region 43, establishing a tight seal between the fuel-tank sensor assembly 1 and the fuel tank 3.

Alternatively, the recess 41 of the second sealing region 43 and consequently the sealing surface of the sealing element 40 may also face radially outwards. In particular, the recess 41 may be located on the circumference of the socket 52. In this arrangement, a tight seal is not made with an outward facing rim of the opening 38 of the fuel tank 3 but with the inner wall of a tube-like section of the fuel tank 3, where the fuel-tank sensor assembly 1 is both inserted and secured by the fixation elements 56.

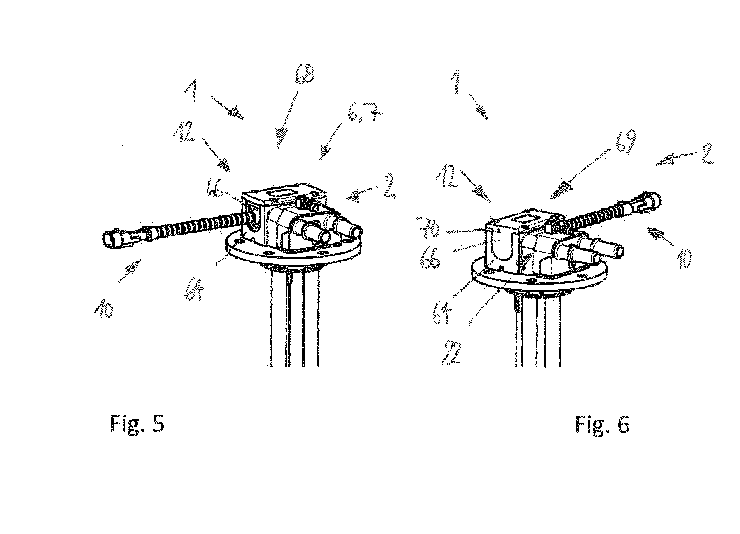

As can be further seen from Figure 5 and 6, the tube-like sensor assembly may also provide for a different orientation and position of the electric connection section 8. This can either be realized by having a housing 12, which can be fastened in at least two different positions onto the flange member 2. Alternatively, the housing 12 may be divided into a part which rests stationary with respect to the flange member 2 and which preferably houses the electric assembly 14, and a part which may be mounted in different positions to the stationary part and thereby provides the different orientations of the electric connection section.

For example, the housing 12 may comprise a first housing part 64 which may rest stationary with respect to the flange section 2 independent of the orientation of the electric-connection section 8. This is particularly useful if the first housing part 64 is monolithically connected to the duct housing 22. The first housing part 64 may comprise two line openings 66 facing in two different directions, for example in directions that are opposite and/or perpendicular to each other. In Figures 5 and 6 only one of the openings 66 is visible. The opening 66 is located opposite the visible opening 66.

The electric connection section may extend through any of the openings 66. For this, a second housing part 67 may be provided, which can be attached to the first housing part 64 in at least two different positions corresponding to the locations of the openings 66.

Thus, the housing 12 can be in a first state 68, in which the electrical connection section 8 faces in one direction. Figure 5 exemplarily shows the state where the electrical connection section 8 is arranged on the left side of the housing 12.

The housing 12 may be further arranged in a second state 69, where the electrical connection section 8 faces in a different direction. This is exemplified in Figure 6 by showing the electrical connection section 8 being located on the right-hand side of the housing 12.

The second housing part 67 may have at least one wall or flap 70 which closes all but one of the openings 66. Which particular opening 66 is closed by the second housing part 67 depends on the orientation in which it is attached to the first housing part 64. For example, the flap 70 in Figure 5 closes the opening 66 on the right-hand side of the housing 12. In Figure 6, the second housing part 67 has been turned by 180° to close the left-hand side opening 66.

Allowing for different orientations of the electric connection section 8 increases the versatility of the tube-like sensor assembly 1.

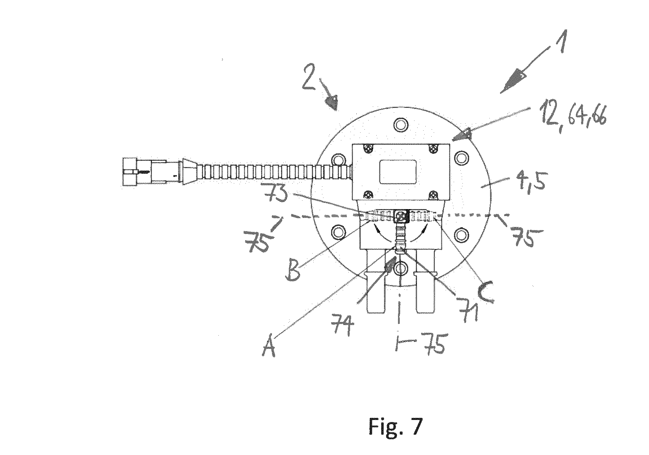

From Fig. 7, it can be seen that the air-ventilation connector 18 may assume different rotational positions A, B, C with respect to the flange member 2. In each of the different rotational positions A, B, C the direction from which an air-ventilation line (not shown) is attached to the air-ventilation connector 18 is changed.

To be able to assume the different rotational positions A, B, C, the air-ventilation connector 18 may be held rotatably with respect to the flange member 2 on the duct housing 22. The air-ventilation connector 18 has a tube-like section 72 which provides a connection section for attaching air-ventilation tubing. The section 72 may be perpendicular to an axis of rotation 73 of the air-ventilation connector 18 and may in particular end at the axis 73.

An end 74 of the air-ventilation connector 18 describes an arc when the air-ventilation connector 18 is rotated. The arc is indicated in Figure 7 by the arrows between the positions A, B and C. Thus, the connection direction 75, from which an air ventilation hose (not shown) may be attached onto the air-ventilation connector 20 can be changed. A plane, in which the air-ventilation connector 18 rotates, is preferably parallel to the flange member 2.

An indexing and/or locking mechanism (not shown) may be provided to lock the air-ventilation connector 18 at any rotational position. Just for the sake of reference, three different rotational positions A, B and C are shown in Figure 7.

Instead of being rotatable, the air-ventilation connector 18 may be configured to be held fixed in different rotational positions relative to the flange member 4, for example in the three different rotational positions A, B and C.

### REFERENCE NUMERALS

- 1: Fuel-tank sensor assembly
- 2: Flange member
- 3: Fuel tank
- 4: Disc-like body of flange member
- 5: Planar section of flange member
- 6: Central part of flange member
- 7: Installations on flange member
- 8: Outward side
- 9: Inward side
- 10: Electric connection section
- 11: Electric connector
- 12: Housing
- 13: Electric line
- 14: Electric assembly
- 15: Electric signals
- 16: Fluid connector
- 18: Air-ventilation connector
- 20: Fuel-line connector
- 22: Duct housing
- 23a: air ventilation duct
- 23b: fuel duct
- 24: Tubing arrangement
- 25: Tubes
- 26: Length of tubing
- 28: Diameter of flange members
- 30: Inward end of tubing
- 32: Filter element
- 34: Fluid-level measuring arrangement
- 36: Floating gauge
- 37: Guiding member
- 38: Opening of fuel tank
- 39: Sealing region
- 40: Sealing element
- 41: Recess
- 41a: Ring wall
- 42: First sealing region
- 43: Second sealing region
- 44: Sealing gasket
- 46: Opening
- 48: Fixation element
- 50: Enforcement member
- 51: Holes in sealing element
- 52: Socket
- 54: Base of socket
- 55: Circumferential wall of socket
- 56: Fixation element of socket
- 57: O-Ring
- 58: Air ventilation opening
- 62: Outer diameter of socket
- 64: First housing part
- 66: Opening in first housing part for electric line or connector
- 67: Second housing part
- 68: first state of housing
- 69: second state of housing
- 70: flap of second housing part
- 72: section of the air-ventilation connector
- 73: Axis of rotation of air-ventilation connector
- 74: End of air-ventilation connector
- 75: Connection direction of air-ventilation connector
- A, B, C: Rotational positions of air-ventilation connector

## Claims

1. Fuel-tank sensor assembly (1), in particular for vehicles with internal-combustion engines, comprising a flange member (2) which is adapted to be mounted to a fuel-tank (3), the flange member (2) having an outward side (8), on which fluid connectors (16) are arranged, and an opposite inward side (9), the flange member (2) further comprising, at the inward side (9), at least two annular sealing regions (39, 42, 43) each having a ring-shaped recess (41) that is adapted to receive a ring-shaped sealing element (40).

2. Fuel-tank sensor assembly (1) according to claim 1, wherein the recesses (41) are adjacent to each other and wherein each recess is formed by an annular groove.

3. Fuel-tank sensor assembly (1) according to claim 1 or 2, wherein openings (46) in the flange member (2) are located within the first sealing region (42) of the at least two sealing regions (39), the openings (46) being adapted to receive fixation elements (48) for attaching the fuel-tank sensor assembly (1) to the fuel-tank (3)

4. Fuel-tank sensor assembly (1) according to claim 3, wherein the openings (46) of the flange member (2) are provided with an enforcement member (50).

5. Fuel-tank sensor assembly (1) according to any one of claims 1 to 4, wherein a sealing element (40) is received in one of the recesses (41), the sealing element (40) comprising holes (51) that are aligned with the openings (46) of the flange member (2).

6. Fuel-tank sensor assembly (1) according to any one of claims 1 to 5, wherein the second sealing region (43) of the at least two sealing regions (39) extends around a socket (52) extending on the inward side (9) away from the flange member (2), the socket (52) providing a fixation element (48) which is adapted to attach the fuel-tank assembly to a fuel tank.

7. Fuel-tank sensor assembly (1) according to claim 6, wherein the second sealing region (43) is located at the base of the socket (52).

8. Fuel-tank sensor assembly (1) according to claim 6 or 7, wherein at least one tubing (24) containing at least one fuel duct (23b) and a fluid-level measuring arrangement (34) extend inwards from the socket (52).

9. Fuel-tank sensor assembly (1) according to any one of claims 1 to 8, wherein the second sealing region (43) is surrounded within the first sealing region (42).

10. Fuel-tank sensor assembly (1) according to any one of claims 1 to 9, wherein the fuel-tank sensor assembly (1) further comprises an electrical assembly (14) arranged at least partly within a housing (12), the electrical assembly including an electrical connection section (10) which is accessible on the outward side (4) of the flange member (2), the housing (12) being configured to be arranged in a first state (68) in which the electrical connection section (10) is facing towards a first direction or in a second state (69) in which the electrical connection section (10) is facing towards a second direction, the first direction preferably being perpendicular or opposite to the second direction.

11. Fuel-tank sensor assembly (1) according to claim 9, wherein the housing (12) comprises a first housing part (64) which includes at least two openings (66) facing in different directions and being configured to have the electrical connection assembly (10) extending therethrough, and a second housing part (67) which is adapted to be mounted to the first housing part (64) in at least two positions, wherein, in a first of the at least two positions, one opening (66) is closed by the second housing part (67) and the other opening (66) is left open, and, in the second of the at least two positions, the other opening (66) is closed by the second housing part (67) and one opening (66) is open.

12. Fuel-tank sensor assembly (1) according to claim 11, wherein the first housing part (64) is monolithically combined with a duct housing (22), the duct housing (22) comprising at least one fuel duct (23b).

13. Fuel-tank sensor assembly (1) according to any one of claims 1 to 12, further comprising an air-ventilation connector (18), which is configured to be connected to an air-ventilation line and which is held rotatably relative to the flange member (2).

14. Fuel-tank sensor assembly (1) according to claim 13, wherein the air-ventilation connector (18) is held rotatably relative to the flange member (2) in a plane parallel to the flange member (2).
